# EUROPÄISCHE PATENTSCHRIFT

(11) **EP 3 300 578 B1**
(45) Veröffentlichungstag und Bekanntmachung des Hinweises auf die Patenterteilung: **01.09.2021**
(21) Anmeldenummer: 17171194.8
(22) Anmeldetag: 16.05.2017
(51) Int. Cl.: A01D 41/127

(54) **VERFAHREN ZUR ANSTEUERUNG EINER LANDWIRTSCHAFTLICHEN ARBEITSMASCHINE**
METHOD FOR CONTROLLING AN AGRICULTURAL MACHINE
PROCÉDÉ DE COMMANDE D'UN ENGIN AGRICOLE

(30) Priorität: 28.09.2016 DE 102016118306
(43) Veröffentlichungstag der Anmeldung: 04.04.2018
(73) Patentinhaber: CLAAS Selbstfahrende Erntemaschinen GmbH, 33428 Harsewinkel (DE)
(72) Erfinder: Bormann, Bastian, 33334 Gütersloh (DE); Middelberg, René, 49080 Osnabrück (DE)
(74) Vertreter: CLAAS Gruppe

(56) Entgegenhaltungen:
- EP-A2- 2 708 103
- GB-A- 911 361
- US-A- 5 855 108

## Beschreibung

Die vorliegende Erfindung betrifft ein Verfahren zur Ansteuerung einer landwirtschaftlichen Arbeitsmaschine gemäß dem Oberbegriff von Anspruch 1 sowie eine solche landwirtschaftliche Arbeitsmaschine gemäß dem Oberbegriff von Anspruch 13.

Bei der in Rede stehenden landwirtschaftlichen Arbeitsmaschine kann es sich um jedwede landwirtschaftliche Arbeitsmaschine handeln, die mit einer Steuerungseinrichtung, mit mindestens einem Arbeitsorgan und mit einem Hauptantrieb für den Antrieb des Arbeitsorgans ausgestattet ist. Dazu gehören bspw. selbstfahrende Erntemaschinen, insbesondere Feldhäcksler, Mähdrescher o. dgl. Weiter sind von diesem Begriff nicht selbstfahrende Anbaugeräte sowie die Kombination der jeweiligen Zugmaschine mit dem Anbaugerät umfasst.

Die landwirtschaftliche Arbeitsmaschine (GB 911,361 A), von der die Erfindung ausgeht, ist mit einem Hauptantrieb und mehreren dem Hauptantrieb antriebstechnisch nachgeschalteten Arbeitsorganen wie einem Schrägförderer oder einer Dreschtrommel eines Mähdreschers ausgestattet. Die antriebstechnische Kopplung zwischen dem Hauptantrieb und den Arbeitsorganen ist jeweils über einen Antriebsstrang vorgesehen. Bei der bekannten Arbeitsmaschine ist dem Schrägförderer eine Überwachungseinrichtung zugeordnet, die basierend auf der Auslenkung eines Trägers des Schrägförderers den durchlaufenden Gutstrom und damit die Belastung des Schrägförderers erfasst. Basierend auf dieser Erfassung steuert die Steuerungseinrichtung die Arbeitsmaschine im Übrigen an. Diese Art der Ansteuerung der Arbeitsmaschine erfordert mit der Auslenkbarkeit des dem Schrägförderer zugeordneten Trägers eine aufwendige Konstruktion, die mit vergleichsweise hohen Kosten verbunden ist.

Der Begriff "Belastung" steht vorliegend für jedwede Kraft- oder Drehmomentbelastung einer Antriebsstrangkomponente des Antriebsstrangs zwischen Hauptantrieb und Arbeitsorgan.

Der Erfindung liegt das Problem zugrunde, das bekannte Verfahren zur Ansteuerung einer landwirtschaftlichen Arbeitsmaschine derart auszugestalten und weiterzubilden, dass die Ansteuerung belastungsabhängig vorgenommen werden kann, ohne dass hierfür aufwendige konstruktive Maßnahmen getroffen werden müssen.

Das obige Problem wird bei einem Verfahren zur Ansteuerung einer landwirtschaftlichen Arbeitsmaschine gemäß dem Oberbegriff von Anspruch 1 durch die Merkmale des kennzeichnenden Teils von Anspruch 1 gelöst.

Wesentlich ist die grundsätzliche Überlegung, dass eine notwendige Voraussetzung für eine zuverlässige Erfassung der Belastung im Antriebsstrang darin besteht, dass eine sichere Kenntnis darüber vorliegt, ob sich der Antriebsstrang in einem Nennbetrieb oder in einem Überlastbetrieb befindet. Im Nennbetrieb lässt sich das Arbeitsorgan dauerhaft antreiben, während der Antriebsstrang im Überlastbetrieb regelmäßig nur kurzzeitig betrieben werden darf, um die Beschädigung von Komponenten im Antriebsstrang zu vermeiden. Vor diesem Hintergrund kommt der sicheren Identifizierung des Überlastbetriebs ganz besondere Bedeutung zu.

Vorschlagsgemäß ist weiter erkannt worden, dass sich der Überlastbetrieb des Antriebsstrangs auf einfache Weise identifizieren lässt, indem mittels der Steuerungseinrichtung eine Änderung eines Übersetzungsdeltas und eine Änderung der Belastung im Antriebsstrang unabhängig voneinander erfasst werden. Dabei handelt es sich bei dem Übersetzungsdelta um den Unterschied zwischen der realen Übersetzung und der Leerlaufübersetzung im Antriebsstrang oder in einem Teil des Antriebsstrangs. Alle Ausführungen zu dem Antriebsstrang insgesamt gelten für einen Teil des Antriebsstrangs, also beispielsweise für einen Riementrieb, dem weitere Riementriebe vor- oder nachgeschaltet sind, entsprechend.

Ein obiges Übersetzungsdelta ergibt sich bei kraftschlüssigen Antriebssträngen stets, wenn das Arbeitsorgan unter Last, also unter einer Belastung im Antriebsstrang, angetrieben wird. Bei einem Riementrieb beispielsweise geht dieses Übersetzungsdelta auf den allgemein bekannten Schlupf zurück.

Interessant bei der vorschlagsgemäßen Lösung ist die Tatsache, dass im Nennbetrieb regelmäßig ein einfacher Zusammenhang zwischen Übersetzungsdelta und Belastung besteht, so dass von einem erfassten Übersetzungsdelta ohne Weiteres auf die Belastung im Arbeitsstrang geschlossen werden kann. Im Überlastbetrieb gilt dieser einfache Zusammenhang nicht mehr, so dass eine Ermittlung der Belastung basierend auf dem Übersetzungsdelta nicht mehr möglich ist. Allerdings lässt sich aus der Erfassung des Übersetzungsdeltas allein der Überlastbetrieb nicht identifizieren. Auch die unabhängige Erfassung der Belastung im Antriebsstrang gibt als solche keinen Aufschluss darüber, ob sich der Antriebsstrang im Nennbetrieb oder im Überlastbetrieb befindet. Dadurch, dass vorschlagsgemäß sowohl eine Änderung des Übersetzungsdeltas als auch eine Änderung der Belastung im Antriebsstrang unabhängig voneinander erfasst werden, steht nicht nur eine sichere Erfassung der Belastung im Nennbetrieb zur Verfügung. Vielmehr ist auch eine sichere Identifizierung des Überlastbetriebs im Antriebsstrang möglich.

Es darf darauf hingewiesen werden, dass die Erfassung der Änderung des Übersetzungsdeltas und der Änderung der Belastung vorzugsweise mittelbar über die Erfassung einzelner Werte für das Übersetzungsdelta und einzelner Werte für die Belastung vorgesehen ist.

Der Antriebsstrangzustand wird vorliegend durch die oben angesprochene Leerlaufübersetzung repräsentiert, die der Antriebsstrang in dem jeweiligen Antriebsstrangzustand im Leerlauf, also im abtriebsseitig lastfreien Zustand, erzeugt. Der Antriebsstrangzustand ist also nichts anderes als die mechanische Konfiguration des Antriebsstrangs, die ursächlich für die jeweilige Übersetzung ist. Für den Fall, dass der Antriebsstrang von einem Riementrieb mit Variator bereitgestellt ist, wird der Antriebsstrangzustand durch die Einstellung des Variators bestimmt, die kausal für die Übersetzung des Riementriebs ist.

Der unabhängig voneinander vorgenommenen Erfassung der Änderung des Übersetzungsdeltas einerseits und der Änderung der Belastung im Antriebsstrang andererseits kommt für die vorschlagsgemäße Lösung ganz besondere Bedeutung zu. Die Formulierung "unabhängig" bedeutet vorliegend, dass die Erfassung der Belastung nicht von dem Übersetzungsdelta abgeleitet wird und andersherum, dass die Erfassung des Übersetzungsdeltas nicht von der Belastung abgeleitet wird. Vielmehr wird die Erfassung der Änderung des Übersetzungsdeltas und der Änderung der Belastung jeweils eigenständig und für sich genommen durchgeführt.

Bei einer besonders einfach umzusetzenden Variante gemäß Anspruch 2 wird die Änderung des Übersetzungsdeltas durch die Erfassung einer Drehzahländerung eine Antriebsstrangkomponente, insbesondere eine Antriebsstrangkomponente am Arbeitsorgan, erfasst. Diese einfach Erfassung des Übersetzungsdeltas ist insbesondere möglich, wenn die Drehzahl am Hauptantrieb konstant gehalten wird.

Eine bevorzugte Möglichkeit für die Erfassung der Belastung im Antriebsstrang ist gemäß Anspruch 3 die Messung der Belastung am Arbeitsorgan. Denkbar ist hier die Messung des an einer Antriebswelle des Antriebsorgans anliegenden Drehmoments. Hierfür sind aus dem Stand der Technik entsprechende Drehmomentsensoren bekannt.

Die besonders bevorzugten Ausgestaltungen gemäß den Ansprüchen 4 bis 6 betreffen einfach umzusetzende Varianten für die Identifikation des Überlastbetriebs. Dabei wird gemäß Anspruch 4 davon ausgegangen, dass im Nennbetrieb ein Nennverlauf der Belastung über dem Übersetzungsdelta vorgesehen ist und dass eine Abweichung von dem Nennverlauf Aufschluss darüber gibt, dass sich der Antriebsstrang im Überlastbetrieb befindet. Bei der weiter bevorzugten Ausgestaltung gemäß Anspruch 6 handelt es sich bei dem Nennverlauf hier um einen im Wesentlichen linearen Verlauf, so dass sich die Abweichung des erfassten Verlaufs von einem linearen Verlauf besonders einfach identifizieren lässt. In Abhängigkeit von der mechanischen Ausgestaltung des Antriebsstrangs kann der Überlastverlauf ein im Wesentlichen gleichbleibender Verlauf oder ein Verlauf mit einem Maximum sein, was gemäß den Ansprüchen 7 und 8 wiederum für die Identifikation des Überlastbetriebs genutzt werden kann.

Die weiter bevorzugten Ausgestaltungen gemäß den Ansprüchen 10 bis 12 betreffen bevorzugte Varianten für die Reaktion der Steuerungseinrichtung auf die Identifikation des Überlastbetriebs. Sofern, wie in Anspruch 10 vorgeschlagen, bei Identifikation des Überlastbetriebs das Arbeitsorgan betreffende Drehzahlanpassungen vorgenommen werden, die regelmäßig auf eine Änderung des Antriebsstrangzustands zurückgehen, ist nach erfolgter Drehzahlanpassung die neue Leerlaufübersetzung zu ermitteln und einer zukünftigen Identifikation des Überlastbetriebs zugrunde zu legen.

Nach einer weiteren Lehre gemäß Anspruch 13, der eigenständige Bedeutung zukommt, wird eine landwirtschaftliche Arbeitsmaschine, die für die Durchführung des vorschlagsgemäßen Verfahrens geeignet ist, als solche beansprucht.

Wesentlich für die vorschlagsgemäße Arbeitsmaschine ist die Auslegung der Steuerungseinrichtung derart, dass mittels der Steuerungseinrichtung eine Änderung des Übersetzungsdeltas und eine Änderung der Belastung im Antriebsstrang unabhängig voneinander erfasst werden und hieraus ein Überlastbetrieb des Antriebsstrangs identifiziert wird.

Im Folgenden wird die Erfindung anhand einer lediglich ein Ausführungsbeispiel darstellenden Zeichnung näher erläutert. In der Zeichnung zeigt
- Fig. 1: eine vorschlagsgemäße landwirtschaftliche Arbeitsmaschine zur Durchführung eines vorschlagsgemäßen Verfahrens in einer ganz schematischen Seitenansicht,
- Fig. 2: einen beispielhaften Verlauf der Belastung über dem Übersetzungsdelta im Nennbetrieb (Phase I) und im Überlastbetrieb (Phase II).

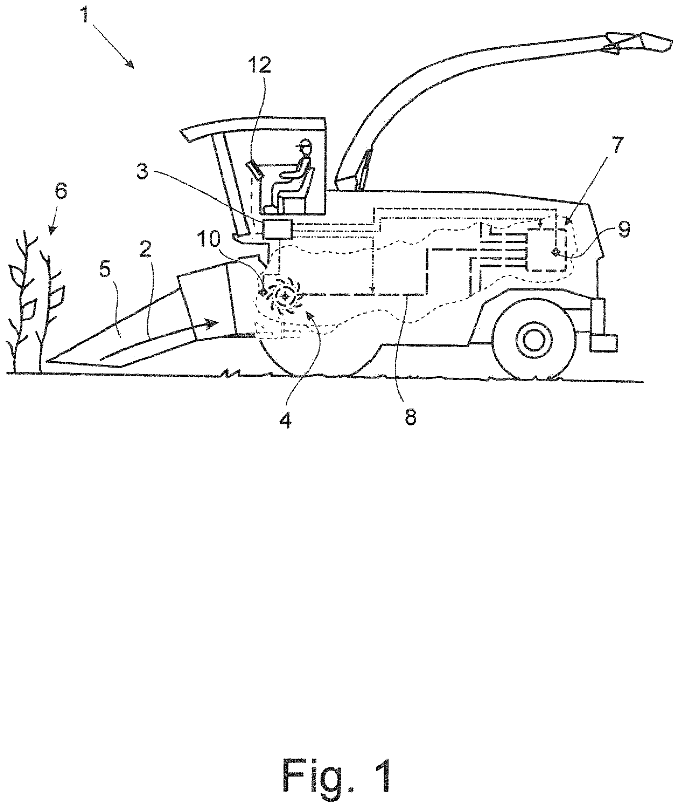

Das vorschlagsgemäße Verfahren ist auf die Ansteuerung einer landwirtschaftlichen Arbeitsmaschine 1 gerichtet, bei der es sich um jedwede landwirtschaftliche Arbeitsmaschine handeln kann. Hier und vorzugsweise dient die landwirtschaftliche Arbeitsmaschine 1 der Aufnahme und der Verarbeitung eines Erntegutstroms 2, der in Fig. 1 lediglich angedeutet ist. Eine solche Arbeitsmaschine 1 kann beispielsweise eine selbstfahre Erntemaschine, insbesondere ein Mähdrescher oder ein Feldhäcksler, sein. Bei dem dargestellten Ausführungsbeispiel handelt es sich bei der Arbeitsmaschine 1 um einen Feldhäcksler, was nicht beschränkend zu verstehen ist.

Die Arbeitsmaschine 1 ist mit einer Steuerungseinrichtung 3 ausgestattet, die der Ansteuerung mindestens eines Arbeitsorgans 4 dient. In Fig. 1 ist beispielhaft das als Häckselwerk ausgestaltete Arbeitsorgan 4 dargestellt. Andere Arbeitsorgane sind eine dem Häckselwerk nachgeschaltete Fördereinrichtung, ein dem Häckselwerk vorgeschaltetes Vorsatzgerät 5 zur Aufnahme von Erntegut 6 o. dgl..

Im Sinne einer vereinfachten Darstellung ist im Folgenden stets von lediglich einem einzigen Arbeitsorgan 4 die Rede. Alle diesbezüglichen Ausführungen gelten für alle anderen, eventuell vorhandenen Arbeitsorgane entsprechend.

Die in Fig. 1 dargestellte Arbeitsmaschine 1 ist ferner mit einem Hauptantrieb 7 für den Antrieb des Arbeitsorgans 4 ausgestattet, wobei ein Antriebsstrang 8 vorgesehen ist, der eine antriebstechnische Kopplung zwischen dem Arbeitsorgan 4 und dem Hauptantrieb 7 herstellt. Im Arbeitsbetrieb wird das Arbeitsorgan 4 also über den Antriebsstrang 8 von dem Hauptantrieb 7 angetrieben.

Bei dem Hauptantrieb 7 handelt es sich vorzugsweise um einen Verbrennungsmotor, insbesondere um einen Dieselmotor. Grundsätzlich ist es denkbar, dass zwei oder mehr als zwei solcher Hauptantriebe 7 vorgesehen sind. Der Hauptantrieb 7 bzw. die Hauptantriebe 7 ist bzw. sind von der Steuerungseinrichtung 3 ansteuerbar.

Der Antriebsstrang 8 oder ein Teil des Antriebsstrangs 8 erzeugt je nach Antriebsstrangzustand eine reale Übersetzung zwischen dem Hauptantrieb 7 und dem Arbeitsorgan 4. Im Folgenden betrifft die Übersetzung stets die Übersetzung zwischen Hauptantrieb 7 und Arbeitsorgan 4, also die Übersetzung des gesamten Antriebsstrangs 8. Die vorschlagsgemäße Lösung kann aber auch nur auf einen Teil des Antriebsstrangs 8 gerichtet sein. Alle vorliegenden Ausführungen gelten hierfür entsprechend.

Zur Ermittlung der realen Übersetzung sind ein Drehgeber 9 für die Erfassung der den Hauptantrieb 7 betreffenden Drehzahl und ein Drehgeber 10 für die Erfassung der das Arbeitsorgan 4 betreffenden Drehzahl vorgesehen. Die Steuerungseinrichtung 3 erzeugt aus dem Quotienten der über die Drehgeber 9, 10 ermittelten Drehzahlen die reale Übersetzung zwischen dem Hauptantrieb 7 und dem Arbeitsorgan 4.

Der Antriebsstrangzustand beschreibt den mechanischen Zustand des Antriebsstrangs 8, der ursächlich für die resultierende, reale und damit messbare Übersetzung ist. Hierfür ist der Antriebsstrang 8 vorzugsweise mit einer noch zu erläuternden Getriebekomponente ausgestattet, deren Getriebezustand die reale Übersetzung zwischen dem Hauptantrieb 7 und dem Arbeitsorgan 4 zumindest mitbestimmt.

Vorliegend wird der Antriebsstrangzustand durch eine fiktive Leerlaufübersetzung repräsentiert. Die Leerlaufübersetzung entspricht der Übersetzung, die der Antriebsstrang 8 oder der betreffende Teil des Antriebsstrangs 8 in einem bestimmten Antriebsstrangzustand im Leerlauf, also bei abtriebsseitig lastfreiem Betrieb erzeugt.

Der Antriebsstrang 8 ist hier so getroffen, dass im Lastbetrieb die reale Übersetzung von der jeweiligen Leerlaufübersetzung abweicht. Entsprechend geht der Antrieb des Arbeitsorgans 4 unter einer Belastung B im Antriebsstrang 8 stets mit einem Übersetzungsdelta d zwischen der realen Übersetzung und der Leerlaufübersetzung einher. Wie oben angedeutet, repräsentiert das Übersetzungsdelta d im Nennbetrieb die Belastung B des Arbeitsorgans 4, so dass aus dem Übersetzungsdelta d grundsätzliche die Belastung B des Arbeitsorgans 4 ermittelt werden kann. Am Beispiel des dargestellten Feldhäckslers oder eines Mähdreschers kann die Belastung B des Arbeitsorgans 4 wiederum Aufschluss über das Vorhandensein/Nichtvorhandensein eines Gutstroms oder auf die Höhe eines Gutstroms geben. Von besonderer Bedeutung ist dabei allerdings die Tatsache, dass bei einer das Arbeitsorgan 4 betreffenden Drehzahlanpassung, die auf eine Verstellung des Antriebsstrangzustands zurückgeht, stets eine Nachführung der Leerlaufübersetzung vorgenommen werden muss.

Um festzustellen, ob sich der Antriebsstrang 8 im Nennbetrieb oder im Überlastbetrieb befindet, wird mittels der Steuerungseinrichtung 3 vorschlagsgemäß nicht nur eine Änderung des Übersetzungsdeltas d, sondern unabhängig davon auch eine Änderung der Belastung B im Antriebsstrang 8 erfasst. Aus der Änderung des Übersetzungsdeltas d und der Änderung der Belastung B wird ein eventueller Überlastbetrieb des Antriebsstrangs 8 identifiziert.

Bemerkenswert bei der vorschlagsgemäßen Lösung ist die Tatsache, dass die separate Erfassung der Belastung B im Antriebsstrang 8 für den Nennbetrieb zunächst redundant erscheint, da, wie oben angesprochen, die Belastung B im Nennbetrieb aus dem Übersetzungsdelta d ermittelbar ist. Allerdings ist auch schon erläutert worden, dass im Überlastbetrieb die Ermittlung der Belastung B aus dem Übersetzungsdelta d nicht mehr ohne Weiteres möglich ist. Beim Eintritt in den Überlastbetrieb fällt diese Redundanz insoweit weg, als mit der separaten Erfassung der Belastung B der Eintritt in den Überlastbetrieb identifiziert werden kann.

Der Antriebsstrang 8 zwischen dem Hauptantrieb 7 und dem Arbeitsorgan 4 kann ganz unterschiedliche Komponenten aufweisen. Dazu gehören insbesondere Kupplungskomponenten und Getriebekomponenten. In besonders bevorzugter Ausgestaltung weist der Antriebsstrang 8 mindestens eine Getriebekomponente zur Erzeugung einer Getriebeübersetzung auf. Weiter vorzugsweise ist die Getriebekomponente mittels der Steuerungseinrichtung 3 zur Verstellung der Getriebeübersetzung der Getriebekomponente ansteuerbar. Diese Ansteuerbarkeit kann genutzt werden, um die oben angesprochenen Drehzahlanpassungen im Falle der Identifikation des Überlastbetriebs bewirken zu können, ohne notwendigerweise die den Hauptantrieb 7 betreffende Drehzahl verändern zu müssen.

Vorzugsweise handelt es sich bei der Getriebekomponente um einen nicht dargestellten Riementrieb mit einer dem Hauptantrieb 7 zugeordneten Antriebsscheibe und einer dem Arbeitsorgan 4 zugeordneten Abtriebsscheibe, wobei der Antriebsscheibe und/oder der Abtriebsscheibe vorzugsweise ein Riemenvariator zur Verstellung der Getriebeübersetzung zugeordnet ist. Vorzugsweise lässt sich der Riemenvariator wie oben angedeutet mittels der Steuerungseinrichtung 3 ansteuern, so dass die Getriebeübersetzung der Getriebekomponente verstellbar und damit der Antriebsstrangzustand des Antriebsstrangs 8 entsprechend verstellbar ist.

Eine Zunahme der Belastung des Arbeitsorgans 4 führt hier zu einer Zunahme des Schlupfes im Riementrieb. Der Schlupf entspricht dem oben angesprochenen Übersetzungsdelta d, zu dessen Ermittlung die Kenntnis der korrekten Leerlaufübersetzung erforderlich ist. Dies bedeutet, dass spätestens nach einer oben angesprochenen Drehzahlanpassung stets eine vorschlagsgemäße, erneute Ermittlung der Leerlaufübersetzung erforderlich ist. Dies kann durch eine Ermittlung der Einstellung des Variators oder durch eine Messung der realen Übersetzung im oben angesprochenen Leerlauf, also bei abtriebsseitig lastfreiem Betrieb, ermittelt werden. Im Folgenden wird zur Erläuterung vorteilhafter Ausgestaltungen unterstellt, dass zwischen dem Hauptantrieb 7 und dem Arbeitsorgan 4 ein oben angesprochener Riementrieb mit Antriebsscheibe am Hauptantrieb 7 und Abtriebsscheibe am Arbeitsorgan 4 existiert. Alle diesbezüglichen Ausführungen gelten für alle anderen Möglichkeiten der Auslegung des Antriebsstrangs 8 oder des betreffenden Teils des Antriebsstrangs 8 entsprechend.

Sofern die Steuerungseinrichtung 3 dafür sorgt, dass die hauptantriebsseitige Drehzahl, hier also die Drehzahl der Antriebsscheibe, konstant bleibt, lässt sich eine Änderung des Übersetzungsdeltas d einfach dadurch erfassen, dass eine Drehzahländerung an der Abtriebsscheibe erfasst wird. Hierfür lässt sich der oben angesprochene Drehgeber 10 nutzen. Alternativ kann die Erfassung der Änderung des Übersetzungsdeltas d aber auch durch die Erfassung einer Änderung eines Drehzahlunterschieds zweier einander nachgeschalteter Antriebskomponenten, hier der Antriebsscheibe und der Abtriebsscheibe, realisiert sein. Dann kommen entsprechend die beiden oben angesprochenen Drehgeber 9, 10 zum Einsatz.

Die Änderung der Belastung im Antriebsstrang 8 kann vorzugsweise durch eine Messung der Belastung am Arbeitsorgan 4 oder an einer dem Arbeitsorgan 4 vorgeschalteten Antriebsstrangkomponente vorgenommen werden. Hier und vorzugsweise ist der Abtriebsscheibe am Arbeitsorgan 4 ein entsprechender Drehmomentsensor zugeordnet. Andere Möglichkeiten der separaten Erfassung der Belastung im Antriebsstrang 8 sind denkbar. Beispielsweise kann am Beispiel eines Riementriebs, bei dem ein Variator vorgesehen ist, ein Variatordruck oder eine Distanz der Variatorscheiben zueinander zur Erfassung der Belastung gemessen werden. Denkbar ist auch, dass die Belastung von einer gemessenen Auslenkung eines Riemenspanners abgeleitet wird.

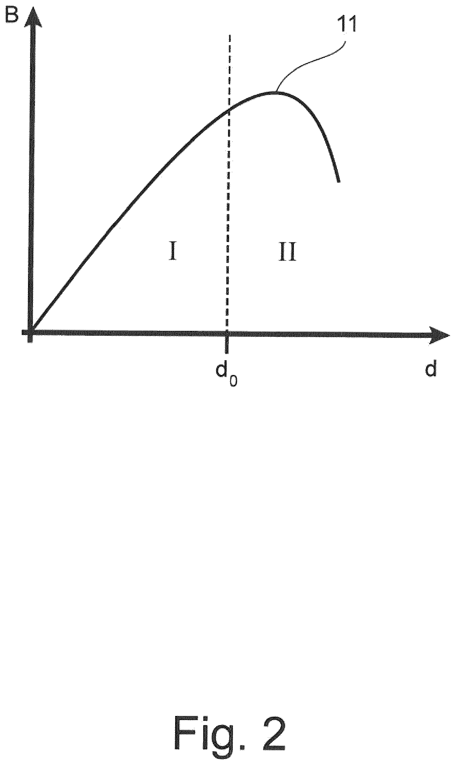

Ein beispielhafter Verlauf der Belastung B, bei der es sich vorzugsweise um die Belastung B am Arbeitsorgan 4 handelt, ist in Fig. 2 dargestellt. Der Verlauf dieser Belastung B ist in Fig. 2 über dem Übersetzungsdelta d aufgetragen. Hier wird deutlich, dass im Nennbetrieb, der in Fig. 2 mit dem Bezugszeichen I angedeutet ist, die Belastung B linear mit dem Übersetzungsdelta d ansteigt.

Fig. 2 zeigt weiter, dass sich an den Nennbetrieb, der in Fig. 2 mit dem Bezugszeichen I angedeutet ist, ein Überlastbetrieb anschließt, der in Fig. 2 mit dem Bezugszeichen II angedeutet ist. Bereits dieser Darstellung lässt sich entnehmen, dass eine Ermittlung der Belastung B aus dem Übersetzungsdelta d im Überlastbetrieb nicht mehr mit einfachen Mitteln möglich ist. Insbesondere ist festzustellen, dass der Übergang vom Nennbetrieb in den Überlastbetrieb in Abhängigkeit von den jeweiligen Randbedingungen, insbesondere in Abhängigkeit von einem Verschleißzustand des Antriebsstrangs 8, variiert. Am Beispiel des Riementriebs kann es sich bei diesen Randbedingungen beispielsweise um Veränderungen in den Umschlingungwinkeln, in den Scheibendurchmessern, in Verschleißerscheinungen, in der Riemenvorspannung, in den Reibkoeffizienten, in der Riementemperatur, in Vibrationen o. dgl. handeln. Daher ist es erforderlich, diesen "schwimmenden" Übergang zwischen Nennbetrieb und Überlastbetrieb im jeweils aktuellen Betrieb neu zu erfassen.

Im Hinblick auf den in Fig. 2 dargestellten Verlauf der Belastung B ist es nach einer bevorzugten Ausgestaltung vorgesehen, dass der Überlastbetrieb dadurch identifiziert wird, dass der erfasste Verlauf der Belastung B über dem Übersetzungsdelta d von einem Nennverlauf abweicht, der einem Nennbetrieb des Antriebsstrangs 8 zugeordnet ist. Dabei kann es vorgesehen sein, dass der Überlastbetrieb im Einzelnen dadurch identifiziert wird, dass die Abweichung des erfassten Verlaufs der Belastung B über dem Übersetzungsdelta d von dem Nennverlauf einen vorbestimmten Grenzwert oder vorbestimmte Grenzwerte übersteigt. Es lässt sich der Darstellung gemäß Fig. 2, wie oben bereits angedeutet, ferner entnehmen, dass der Nennverlauf ein im Wesentlichen linearer Verlauf ist, wobei der Überlastbetrieb dabei identifiziert wird, dass der erfasste Verlauf der Belastung B über dem Übersetzungsdelta d von dem im Wesentlichen linearen Verlauf abweicht. Auch hier kann ein vorbestimmter Grenzwert definiert sein, bei dessen Übersteigen der Überlastbetrieb als identifiziert gilt.

Andere Strategien zur Identifikation des Überlastbetriebs sind denkbar. Beispielsweise kann der Überlastbetrieb dadurch identifiziert werden, dass der erfasste Verlauf der Belastung B über dem Übersetzungsdelta d bei ansteigendem Übersetzungsdelta d eine im Wesentlichen gleichbleibende oder sogar absinkende Belastung B aufweist. Hierdurch wird der Überlastbetrieb erkannt, wenn sich die Belastung B einem in Fig. 2 gezeigten Maximum 11 annähert. Es kann weiter vorzugsweise auch vorgesehen sein, dass der Überlastbetrieb dadurch identifiziert wird, dass der erfasste Verlauf der Belastung B über dem Übersetzungsdelta d das Maximum 11 durchläuft.

Es wurde ebenfalls bereits darauf hingewiesen, dass sich der Verlauf der Belastung B über dem Übersetzungsdelta d in Abhängigkeit von sich verändernden Randbedingungen ändern kann. Dies bedeutet insbesondere, dass sich das Übersetzungsdelta d₀, in dem der Übergang vom Nennbetrieb in den Überlastbetrieb stattfindet, in Abhängigkeit von sich verändernden Randbedingungen ändert. Solche Randbedingungen wurden weiter oben ebenfalls angesprochen.

Es darf darauf hingewiesen werden, dass der Nennverlauf und/oder der Überlastverlauf in der Steuerungseinrichtung 3 grundsätzlich voreingestellt sein kann bzw. können, wobei davon ausgegangen wird, dass der Übergang zwischen Nennbetrieb und Überlastbetrieb entsprechend variabel ist. Alternativ kann es aber auch vorgesehen sein, dass der Nennverlauf und/oder der Überlastverlauf basierend auf den vorschlagsgemäß unabhängig voneinander erfassten Werten für die Belastung B und das Übersetzungsdelta d an die jeweils aktuellen Randbedingungen angepasst und abgespeichert wird bzw. werden. Dadurch ergibt sich eine insgesamt besonders realitätsnahe Ansteuerung der Arbeitsmaschine 1.

Für die Reaktion auf die Identifikation des Überlastbetriebs sind bei dem dargestellten und insoweit bevorzugten Ausführungsbeispiel verschiedene vorteilhafte Varianten denkbar. Ganz allgemein ist es so, dass Maßnahmen zur Verbesserung der Betriebssituation eingeleitet werden.

In einer ersten Variante werden bei der Identifikation des Überlastbetriebs das Arbeitsorgan 4 betreffende Drehzahlanpassungen vorgenommen. Dies erfolgt hier und vorzugsweise durch eine entsprechende Ansteuerung des Antriebsstrangs 8, was mit einer Verstellung des Antriebsstrangzustands und damit einer Änderung der realen Übersetzung einhergeht. Nach erfolgter Drehzahlanpassung muss entsprechend die neue Leerlaufübersetzung ermittelt werden, so dass die nachfolgende Identifikation des Überlastbetriebs auf einem den aktuellen Antriebsstrangzustand entsprechenden Wert für die Leerlaufübersetzung basiert.

Alternativ kann es vorgesehen sein, dass mittels der Steuerungseinrichtung 3 auf die Identifikation des Überlastbetriebs hin eine Abschaltung des Hauptantriebs 7 ausgelöst wird. Dies ist insbesondere sachgerecht, wenn eine Fortsetzung des Betriebs der Arbeitsmaschine 1 zu einem Sach- oder Personenschaden führen würde. Die Abschaltung des Hauptantriebs 7 kann das Stoppen des Hauptantriebs 7 oder aber das Entkuppeln des Hauptantriebs 7 von dem Antriebsstrang 8 bedeuten.

Alternativ oder zusätzlich kann es vorgesehen sein, dass auf die Identifikation des Überlastbetriebs hin eine Belastungsinformation über eine Mensch-Maschine-Schnittstelle 12 ausgegeben wird. Diese Belastungsinformation kann in einer ersten Variante nur die Information über das Vorliegen des Überlastbetriebs umfassen. In einer zweiten Variante kann die Belastungsinformation auch den erfassten Verlauf der Belastung über dem Übersetzungsdelta d betreffen.

Nach einer weiteren Lehre, der eigenständige Bedeutung zukommt, wird die landwirtschaftliche Arbeitsmaschine 1, die für die Ausführung des vorschlagsgemäßen Verfahrens ausgelegt ist, als solche beansprucht. Auf alle Ausführungen, die geeignet sind, die landwirtschaftliche Arbeitsmaschine 1 als solche zu beschreiben, darf verwiesen werden.

Es darf noch darauf hingewiesen werden, dass die Steuerungseinrichtung 3 einen üblichen Aufbau mit zumindest einem Speicher und zumindest einem Mikroprozessor aufweist. Die vorschlagsgemäßen Verfahrensschritte werden vorschlagsgemäß basierend auf einer in den Speicher abgespeicherten Software in dem Mikroprozessor abgearbeitet.

### Bezugszeichenliste

- 1: Arbeitsmaschine
- 2: Erntegutstrom
- 3: Steuerungseinrichtung
- 4: Arbeitsorgan
- 5: Vorsatzgerät
- 6: Erntegut
- 7: Hauptantrieb
- 8: Antriebsstrang
- 9: Drehgeber, Drehzahlhauptantrieb
- 10: Drehgeber, Drehzahlarbeitsorgan
- 11: Maximum
- 12: Mensch-Maschine-Schnittstelle
- d: Übersetzungsdelta
- B: Belastung

## Patentansprüche

1. Verfahren zur Ansteuerung einer landwirtschaftlichen Arbeitsmaschine (1), die insbesondere der Aufnahme und Verarbeitung eines Erntegutstroms (2) dient, mit einer Steuerungseinrichtung (3), mit mindestens einem Arbeitsorgan (4) und mit einem Hauptantrieb (7) für den Antrieb des Arbeitsorgans (4), wobei das Arbeitsorgan (4) über einen Antriebsstrang (8) von dem Hauptantrieb (7) angetrieben wird, wobei der Antriebsstrang (8) oder ein Teil des Antriebsstrangs (8) je nach Antriebsstrangzustand eine reale Übersetzung erzeugt, wobei der Antriebsstrangzustand durch eine fiktive Leerlaufübersetzung repräsentiert wird, wobei der Antrieb des Arbeitsorgans (4) unter einer Belastung (B) im Antriebsstrang (8) stets mit einem Übersetzungsdelta (d) zwischen der realen Übersetzung und der Leerlaufübersetzung einhergeht,
**dadurch gekennzeichnet,**
**dass** mittels der Steuerungseinrichtung (3) eine Änderung des Übersetzungsdeltas (d) und eine Änderung der Belastung (B) im Antriebsstrang (8) unabhängig voneinander erfasst werden und hieraus ein Überlastbetrieb des Antriebsstrangs (8) identifiziert wird.

2. Verfahren nach Anspruch 1, **dadurch gekennzeichnet, dass** die Änderung des Übersetzungsdeltas (d) durch die Erfassung einer Drehzahländerung einer Antriebsstrangkomponente oder durch die Erfassung einer Änderung eines Drehzahlunterschieds zweier einander nachgeschalteter Antriebsstrangkomponenten erfasst wird.

3. Verfahren nach Anspruch 1 oder 2, **dadurch gekennzeichnet, dass** die Änderung der Belastung (B) im Antriebsstrang durch eine Messung der Belastung (B) am Arbeitsorgan oder an einer dem Arbeitsorgan vorgeschalteter Antriebsstrangkomponente erfasst wird.

4. Verfahren nach einem der vorhergehenden Ansprüche, **dadurch gekennzeichnet, dass** der Überlastbetrieb dadurch identifiziert wird, dass der erfasste Verlauf der Belastung (B) über dem Übersetzungsdelta (d) von einem Nennverlauf abweicht, der einem Nennbetrieb des Antriebsstrangs zugeordnet ist.

5. Verfahren nach einem der vorhergehenden Ansprüche, **dadurch gekennzeichnet, dass** der Überlastbetrieb dadurch identifiziert wird, dass die Abweichung des erfassten Verlaufs der Belastung (B) über dem Übersetzungsdelta (d) von dem Nennverlauf einen vorbestimmten Grenzwert übersteigt.

6. Verfahren nach einem der vorhergehenden Ansprüche, **dadurch gekennzeichnet, dass** der Nennverlauf ein im Wesentlich linearer Verlauf ist und dass der Überlastbetrieb dadurch identifiziert wird, dass der erfasste Verlauf der Belastung (B) über dem Übersetzungsdelta (d) von dem im Wesentlichen linearen Verlauf abweicht.

7. Verfahren nach einem der vorhergehenden Ansprüche, **dadurch gekennzeichnet, dass** der Überlastbetrieb dadurch identifiziert wird, dass der erfasste Verlauf der Belastung (B) über dem Übersetzungsdelta (d) bei ansteigendem Übersetzungsdelta (d) eine im Wesentlichen gleichbleibende oder absinkende Belastung (B) aufweist.

8. Verfahren nach einem der vorhergehenden Ansprüche, **dadurch gekennzeichnet, dass** der Überlastbetrieb dadurch identifiziert wird, dass der erfasste Verlauf der Belastung (B) über dem Übersetzungsdelta (d) ein Maximum durchläuft.

9. Verfahren nach einem der vorhergehenden Ansprüche, **dadurch gekennzeichnet, dass** sich der Verlauf der Belastung (B) über dem Übersetzungsdelta (d) in Abhängigkeit von sich verändernden Randbedingungen ändert, vorzugsweise, dass sich das Übersetzungsdelta, in dem der Übergang vom Nennbetrieb in den Überlastbetrieb stattfindet, in Abhängigkeit von sich verändernden Randbedingungen ändert.

10. Verfahren nach einem der vorhergehenden Ansprüche, **dadurch gekennzeichnet, dass** bei Identifikation des Überlastbetriebs das Arbeitsorgan (4) betreffende Drehzahlanpassungen vorgenommen werden und nach erfolgter Drehzahlanpassung die neue Leerlaufübersetzung ermittelt wird.

11. Verfahren nach einem der vorhergehenden Ansprüche, **dadurch gekennzeichnet, dass** mittels der Steuerungseinrichtung (3) auf die Identifikation des Überlastbetriebs hin eine Abschaltung des Hauptantriebs (7) ausgelöst wird.

12. Verfahren nach einem der vorhergehenden Ansprüche, **dadurch gekennzeichnet, dass** auf die Identifikation des Überlastbetriebs hin eine Belastungsinformation über eine Mensch-Maschine-Schnittstelle (12) ausgegeben wird.

13. Landwirtschaftliche Arbeitsmaschine (1), insbesondere zur Aufnahme und Verarbeitung eines Erntegutstroms (2), mit einer Steuerungseinrichtung (3), mit mindestens einem Arbeitsorgan (4) und mit einem Hauptantrieb (7) für den Antrieb des Arbeitsorgans (4), wobei das Arbeitsorgan (4) über einen Antriebsstrang (8) von dem Hauptantrieb (7) angetrieben wird, wobei der Antriebsstrang (8) oder ein Teil des Antriebsstrangs (8) je nach Antriebsstrangzustand eine reale Übersetzung zwischen dem Hauptantrieb (7) und dem Arbeitsorgan (4) erzeugt, wobei der Antriebsstrangzustand durch eine fiktive Leerlaufübersetzung repräsentiert wird, wobei der Antrieb des Arbeitsorgans (4) stets mit einem Übersetzungsdelta (d) zwischen der realen Übersetzung und der Leerlaufübersetzung einhergeht,
**dadurch gekennzeichnet,**
**dass** mittels der Steuerungseinrichtung (3) eine Änderung des Übersetzungsdeltas (d) und eine Änderung der Belastung (B) im Antriebsstrang (8) unabhängig voneinander erfasst werden und hieraus ein Überlastbetrieb des Antriebsstrangs (8) identifiziert wird.

## Claims

1. A method for controlling an agricultural working machine (1) which in particular serves to pick up and process a flow of harvested material (2), with a control device (3), with at least one operating unit (4) and with a main drive (7) for driving the operating unit (4), wherein the operating unit (4) is driven from the main drive (7) via a drive train (8), wherein the drive train (8) or a portion of the drive train (8) produces an actual transmission ratio which depends on the status of the drive train, wherein the drive train status is represented by a notional no-load transmission ratio, wherein under a load (B) on the drive train (8), the drive for the operating unit (4) is permanently associated with a transmission ratio delta (d) between the actual transmission ratio and the no-load transmission ratio,
**characterized in that**
a variation in the transmission ratio delta (d) and a variation in the load (B) on the drive train (8) are detected independently of one another by means of the control device (3) and from this, an overload operation of the drive train (8) is identified.

2. The method according to claim 1, **characterized in that** the variation in the transmission ratio delta (d) is detected by detecting a variation in the speed of a drive train component or by detecting a variation in a difference in speed between two drive train components which are connected one after the other.

3. The method according to claim 1 or claim 2, **characterized in that** the variation in the load (B) on the drive train is detected by measuring the load (B) on the operating unit or on a drive train component which is connected upstream of the operating unit.

4. The method according to one of the preceding claims, **characterized in that** the overload operation is identified **in that** the detected profile of the load (B) against the transmission ratio delta (d) deviates from a nominal profile which is associated with a nominal operation of the drive train.

5. The method according to one of the preceding claims, **characterized in that** the overload operation is identified **in that** the deviation of the detected profile of the load (B) against the transmission ratio delta (d) exceeds the nominal profile by a predetermined threshold.

6. The method according to one of the preceding claims, **characterized in that** the nominal profile is a substantially linear profile and **in that** the overload operation is identified **in that** the detected profile of the load (B) against the transmission ratio delta (d) deviates from the substantially linear profile.

7. The method according to one of the preceding claims, **characterized in that** the overload operation is identified **in that**, in the case in which the transmission ratio delta (d) is increasing, the detected profile of the load (B) against the transmission ratio delta (d) has a substantially constant or decreasing load (B).

8. The method according to one of the preceding claims, **characterized in that** the overload operation is identified **in that** the detected profile of the load (B) against the transmission ratio delta (d) passes through a maximum.

9. The method according to one of the preceding claims, **characterized in that** the profile of the load (B) against the transmission ratio delta (d) varies as a function of changing ancillary conditions, preferably **in that** the transmission ratio delta in which the transition from nominal operation to overload operation occurs varies as a function of changing ancillary conditions.

10. The method according to one of the preceding claims, **characterized in that** upon identification of the overload operation, adjustments to speeds in respect of the operating unit (4) are made and after speed adjustment is complete, the new no-load transmission ratio is determined.

11. The method according to one of the preceding claims, **characterized in that** following the identification of the overload operation, the control device (3) switches off the main drive (7).

12. The method according to one of the preceding claims, **characterized in that** following identification of the overload operation, load information is output via a man-machine interface (12).

13. An agricultural working machine (1), in particular for picking up and processing a flow of harvested material (2), with a control device (3), with at least one operating unit (4) and with a main drive (7) for driving the operating unit (4), wherein the operating unit (4) is driven from the main drive (7) via a drive train (8), wherein the drive train (8) or a portion of the drive train (8) produces an actual transmission ratio between the main drive (7) and the operating unit (4) which depends on the status of the drive train, wherein the drive train status is represented by a notional no-load transmission ratio, wherein the drive for the operating unit (4) is permanently associated with a transmission ratio delta (d) between the actual transmission ratio and the no-load transmission ratio,
**characterized in that**
a variation in the transmission ratio delta (d) and a variation in the load (B) on the drive train (8) are detected independently of one another by means of the control device (3) and from this, an overload operation of the drive train (8) is identified.

## Revendications

1. Procédé de commande d'une machine de travail agricole (1) qui sert en particulier à ramasser et à traiter un flux de récolte (2), comprenant un équipement de commande (3), comprenant au moins un organe de travail (4) et comprenant un moyen d'entraînement principal (7) pour entraîner l'organe de travail (4), l'organe de travail (4) étant entraîné par le moyen d'entraînement principal (7) par l'intermédiaire d'une chaîne de transmission (8), la chaîne de transmission (8) ou une partie de la chaîne de transmission (8) générant un rapport de transmission réel selon l'état de la chaîne de transmission, l'état de la chaîne de transmission étant représenté par une transmission fictive en marche à vide, l'entraînement de l'organe de travail (4) s'accompagnant toujours, sous une charge (B) dans la chaîne de transmission (8), d'un delta de rapport de transmission (d) entre le rapport de transmission réel et le rapport de transmission en marche à vide, **caractérisé en ce que** l'équipement de commande (3) permet de détecter indépendamment l'une de l'autre une modification du delta de rapport de transmission (d) et une modification de la charge (B) dans la chaîne de transmission (8) et, sur cette base, d'identifier un fonctionnement en surcharge de la chaîne de transmission (8).

2. Procédé selon la revendication 1, **caractérisé en ce que** la modification du delta de rapport de transmission (d) est détectée par la détection d'une modification de vitesse de rotation d'un composant de chaîne de transmission ou par la détection d'une modification d'une différence de vitesse de rotation entre deux composants de chaîne de transmission montés l'un derrière l'autre.

3. Procédé selon la revendication 1 ou 2, **caractérisé en ce que** la modification de la charge (B) dans la chaîne de transmission est détectée par une mesure de la charge (B) au niveau de l'organe de travail ou au niveau d'un composant de chaîne de transmission monté avant l'organe de travail.

4. Procédé selon une des revendications précédentes, **caractérisé en ce que** le fonctionnement en surcharge est identifié par le fait que la variation détectée de la charge (B) sur le delta de rapport de transmission (d) s'écarte d'une variation nominale qui est associée à un fonctionnement nominal de la chaîne de transmission.

5. Procédé selon une des revendications précédentes, **caractérisé en ce que** le fonctionnement en surcharge est identifié par le fait que l'écart de la variation détectée de la charge (B) sur le delta de rapport de transmission (d) à la variation nominale excède une valeur limite prédéterminée.

6. Procédé selon une des revendications précédentes, **caractérisé en ce que** la variation nominale est une variation sensiblement linéaire et **en ce que** le fonctionnement en surcharge est identifié par le fait que la variation détectée de la charge (B) sur le delta de rapport de transmission (d) s'écarte de la variation sensiblement linéaire.

7. Procédé selon une des revendications précédentes, **caractérisé en ce que** le fonctionnement en surcharge est identifié par le fait que la variation détectée de la charge (B) en cas de delta de rapport de transmission croissant (d) présente une charge (B) sensiblement constante ou décroissante.

8. Procédé selon une des revendications précédentes, **caractérisé en ce que** le fonctionnement en surcharge est identifié par le fait que la variation détectée de la charge (B) sur le delta de rapport de transmission (d) franchit un maximum.

9. Procédé selon une des revendications précédentes, **caractérisé en ce que** la variation de la charge (B) sur le delta de rapport de transmission (d) varie en fonction de conditions marginales variables, de préférence **en ce que** le delta de rapport de transmission dans lequel intervient le passage du fonctionnement nominal au fonctionnement en surcharge varie en fonction de conditions marginales variables.

10. Procédé selon une des revendications précédentes, **caractérisé en ce qu'**en cas d'identification du fonctionnement en surcharge, des adaptations de vitesse de rotation concernant l'organe de travail (4) sont entreprises et, à l'issue de l'adaptation de vitesse de rotation, le nouveau rapport de transmission en marche à vide est déterminé.

11. Procédé selon une des revendications précédentes, **caractérisé en ce qu'**une mise hors service du moyen d'entraînement principal (7) est déclenchée au moyen de l'équipement de commande (3) en vue d'identifier le fonctionnement en surcharge.

12. Procédé selon une des revendications précédentes, **caractérisé en ce qu'**une information de charge est éditée par l'intermédiaire d'une interface homme-machine (12) en vue d'identifier le fonctionnement en surcharge.

13. Machine de travail agricole (1), en particulier pour ramasser et traiter un flux de récolte (2), comprenant un équipement de commande (3), comprenant au moins un organe de travail (4) et comprenant un moyen d'entraînement principal (7) pour entraîner l'organe de travail (4), l'organe de travail (4) étant entraîné par le moyen d'entraînement principal (7) par l'intermédiaire d'une chaîne de transmission (8), la chaîne de transmission (8) ou une partie de la chaîne de transmission (8) générant un rapport de transmission réel entre le moyen d'entraînement principal (7) et l'organe de travail (4) selon l'état de la chaîne de transmission, l'état de la chaîne de transmission étant représenté par une transmission fictive en marche à vide, l'entraînement de l'organe de travail (4) s'accompagnant toujours d'un delta de rapport de transmission (d) entre le rapport de transmission réel et le rapport de transmission en marche à vide, **caractérisée en ce que** l'équipement de commande (3) permet de détecter indépendamment l'une de l'autre une modification du delta de rapport de transmission (d) et une modification de la charge (B) dans la chaîne de transmission (8) et, sur cette base, d'identifier un fonctionnement en surcharge de la chaîne de transmission (8).
